# EUROPEAN PATENT SPECIFICATION

(11) **EP 3 799 225 B1**
(45) Date of publication and mention of the grant of the patent: **20.11.2024**
(21) Application number: 20199464.7
(22) Date of filing: 30.09.2020
(51) Int. Cl.: H01R 13/58, B60R 16/02, H01R 13/6591, H01R 13/6593

(54) **HARNESS ASSEMBLY**
KABELBAUM-ANORDNUNG
ENSEMBLE HARNAIS

(30) Priority: 30.09.2019 IN 201911039581; 28.09.2020 US 202017034705
(43) Date of publication of application: 31.03.2021
(73) Proprietor: Eaton Intelligent Power Limited, Dublin 4 (IE)
(72) Inventor: SCHNEIDER, Michael J., Secane, PA 19018 (US); SPIEGEL, Sam, Merion Station, PA 19066 (US); LE, James H., Philadelphia, PA 19123 (US); CHAVAN, Ganesh R., 411017 Pimpri, Pune (IN)
(74) Representative: Rüger Abel Patentanwälte PartGmbB

(56) References cited:
- EP-A1- 2 892 109
- EP-B1- 2 892 109
- US-A- 4 026 628
- US-A- 6 143 986

## Description

### TECHNICAL FIELD

This application claims the benefit of India Provisional Patent Application Serial No. 201911039581, filed on September 30, 2019.

The present disclosure generally relates to a harness assembly, such as for connecting sensors with another component, including harness assemblies that may be used in connection with engines, such as in connection with vehicles.

### BACKGROUND

This background description is set forth below for the purpose of providing context only. Therefore, any aspect of this background description, to the extent that it does not otherwise qualify as prior art, is neither expressly nor impliedly admitted as prior art against the instant disclosure.

Cables and lead wires can act as unintended antennas to both receive and to radiate an electromagnetic interference (EMI) signal. As such, shields are often incorporated in cable designs as additional conductors added to the cables or wires to help isolate the electromagnetic fields of conductors within the shield from those outside of the shield. Such cable designs may be used, for example, in harness assemblies for connecting sensors, such as a quantitative debris monitoring (QDM) sensor of a vehicle engine's oil debris monitoring system (ODMS), to another component, such as a signal conditioner unit (SCU) in the vehicle. Considerations that go into the cable designs include, but are not limited to, pull strength, strain relief, EMI protection, repairability, environmental sealing, environmental compatibility, ease of manufacturing, and weight.

US 6 143 986 A discloses a harness assembly including a cable having a cable shielding around at least a portion of a plurality of wires, a connector with an integrated backshell arranged at an angle with respect to the cable, a first protective layer disposed around at least a portion of the backshell and the cable to provide EMI shielding, and a second protective layer around at least a portion of the first protective layer, one end of the second protective layer clamped onto a shoulder portion of the backshell by spring clamps or stainless steel bands, thus forming a two layer structure.

EP 2 892 109 A1 discloses a harness assembly and a method for assembling a harness assembly. In one embodiment, the harness assembly comprises cable wires connected to an electrical connector and surrounded by a MCF braided shield and an overbraid. The MCF braided shield is connected to the electrical connector via an integrated backshell using a band clamp. The integrated backshell is arranged at a 90° angle with respect to the cable. A heatshrink boot is shrunk around the electrical connector and the overbraid and the overbraid is terminated short of the electrical connector, but within the coverage of heatshrink boot to help secure the overbraid.

US 4 026 628 A discloses a harness assembly having a deformable tubular shell between a cable and a fitting. One end of the tubular shell is placed over a rubber cover on the cable and secured thereto and the other end of the tubular shell receives a threaded portion of the fitting body and is secured thereto.

There is a desire for solutions/options that minimize or eliminate one or more challenges or shortcomings of cable designs, particularly in to harness assemblies, with respect to one or more of these considerations. The foregoing discussion is intended only to illustrate examples of the present field and should not be taken as a disavowal of scope.

### SUMMARY

According to one aspect of the present invention, a harness assembly includes a cable having a cable shielding around at least a portion of a plurality of wires, a connector with an integrated backshell arranged at an angle with respect to the cable, an external braid disposed around at least a portion of the backshell and the cable, and an overbraid around at least a portion of the external braid, the overbraid having two layers. The overbraid is a single material folded over at least a portion of itself to form the two layers and an end of the overbraid is secured to the cable.

According to another aspect of the present invention, a method for assembling a harness assembly includes arranging a cable and a connector with an integrated backshell at an angle with respect to one another, providing an external braid around at least a portion of the backshell and an end of the cable adjacent to the connector, and providing an overbraid around at least a portion of the external braid, the overbraid having two layers. A single material of the overbraid is folded over at least a portion of itself to form the two layers and an end of the overbraid is secured to the cable.

The foregoing and other aspects, features, details, utilities, and/or advantages of embodiments of the present disclosure will be apparent from reading the following description, and from reviewing the accompanying drawings.

### BRIEF DESCRIPTION OF THE DRAWINGS

**FIG. 1** is a top view generally illustrating an embodiment of a harness assembly according to teachings of the present disclosure.
**FIG. 2** is a cross-sectional view generally illustrating an embodiment of a connector of a harness assembly according to teachings of the present disclosure.
**FIGS. 3-5** are cross-sectional views generally illustrating an embodiment of a method for assembling a harness assembly with a connector according to teachings of the present disclosure.

### DETAILED DESCRIPTION

Reference will now be made in detail to embodiments of the present disclosure, examples of which are described herein and illustrated in the accompanying drawings. While the present disclosure will be described in conjunction with embodiments and/or examples, it will be understood that they are not intended to limit the present disclosure to these embodiments and/or examples. On the contrary, the present disclosure is intended to cover alternatives, modifications, and equivalents.

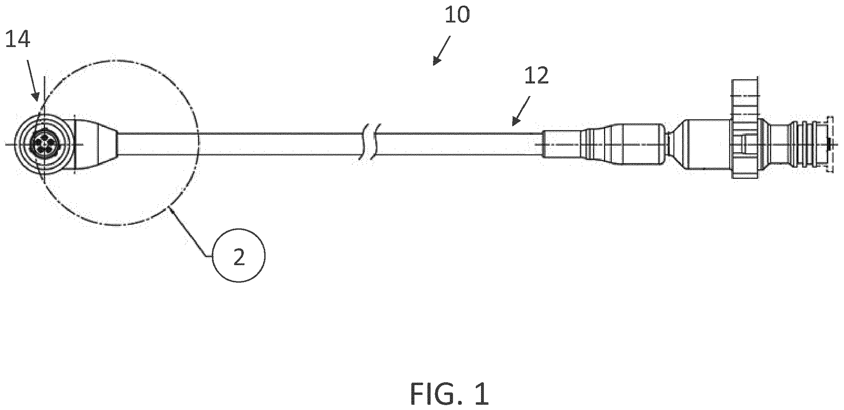

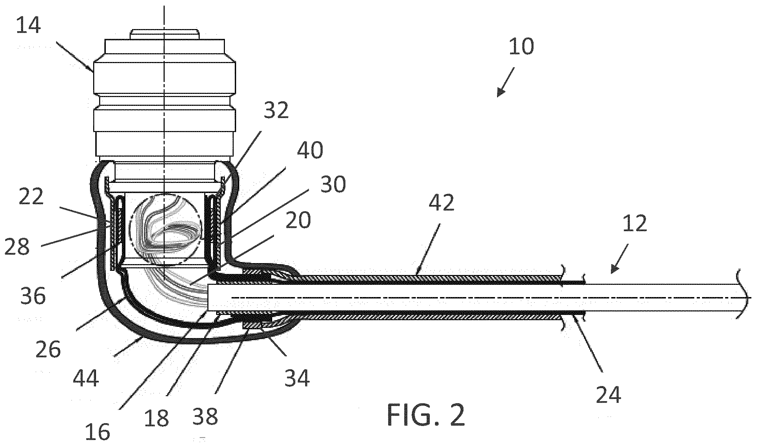

In embodiments, such as generally illustrated in **FIGS. 1** **and** **2**, a harness assembly 10 includes a cable 12 and a connector 14 arranged adjacent a first end of the cable 12. The connector 14 is arranged at an angle with respect to the cable 12, which may be varied based upon a particular required cable configuration. Without limitation, in embodiments, the angle may be approximately 90 degrees. In other embodiments, the angle may be approximately 45 degrees. The cable 12 includes a cable shielding 16 through which wires 20 extend, and the cable shielding may terminate at or within the connector 14. An opposing end of the cable 12 may be configured for attachment and/or connection to a sensor, such as, for example and without limitation, a quantitative debris monitoring (QDM) sensor of a vehicle engine's oil debris monitoring system (ODMS). The connector 14 may generally be configured for attachment and/or connection to another component, such as a signal conditioning unit (SCU) of the vehicle. A polytetrafluoroethylene tubing 18 may be provided at or around a first end of the cable 12.

With embodiments, the connector 14 may be, for example, an EN2997 connector, and includes an integrated backshell 22, such as generally illustrated in **FIG. 2**. The harness assembly 10 includes an external braid 24 disposed around at least a portion of the backshell 22 and around the first end of the cable 12, which may include the polytetrafluoroethylene tubing 18.

The harness assembly 10 further includes an overbraid 26 disposed around at least a portion of the external braid 24. The overbraid 26 includes a first layer 28 and a second layer 30. The overbraid 26 is made from a single material that is folded over at least a portion of itself to form the layers 28, 30. In such a configuration, the folded end 32 may be in a region of the backshell 22 and a free end 34 of the overbraid 26 may be in a region of the first end of the cable 12. However, it should be appreciated that the folded end 32 and the free end 34 may be switched. The double layer configuration of the overbraid 26 may reduce the size of potential gaps in the braid, thereby enhancing the shielding effectiveness against electromagnetic interference. Such a configuration further may, *inter alia*, reduce weight and/or cost.

With embodiments, the external braid 24 and/or the overbraid 26 may be comprised of copper and/or may be nickel-plated.

In embodiments, the external braid 24 and the first layer 28 of the overbraid 26 may be connected or secured to the backshell 22, for example, via a band 36. The second layer 30 of the overbraid 26 may be disposed around the band 36. Where the overbraid 26 is comprised of a single material folded over itself, the single material may be folded over the band 36. The free end 34 of the overbraid 26 is secured to the cable 12, for example, via a cable tie 38.

With embodiments, the harness assembly 10 may include shrink tubing 40 around at least a portion of the overbraid 26 in a region of the backshell 22 and/or shrink tubing 42 around at least a portion of the overbraid 26 in a region of the first end of the cable 12 and/or around at least portion of the cable 12. The harness assembly 10 may further include a heat shrink boot 44 from the connector 14 to the cable 12. The heat shrink boot 44 generally may have an angled configuration at a same or similar angle at which the cable 12 and the connector 14 are arranged with respect to each other, e.g., 45 degrees or 90 degrees. The shrink tubing 40, 42 and/or the heat shrink boot 44 may be made of a fluoroelastomer material, and further may be bonded via a compatible epoxy. The shrink tubing 40, 42 and/or the heat shrink boot 44 generally may provide for environmental protection and/or sealing. A service loop in the wires 20 may be accessible by cutting back the shrink boot 44.

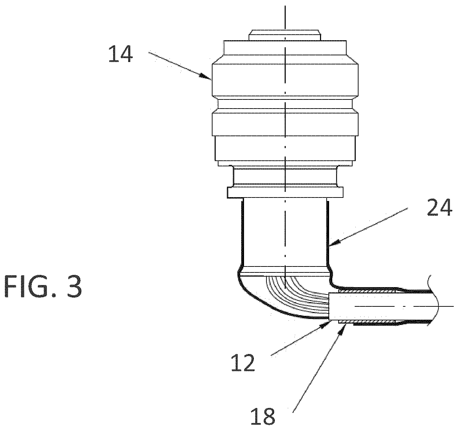

With embodiments generally illustrated in **FIGS. 3-5**, a method for assembling a harness assembly 10 includes arranging a cable 12 and a connector 14 at an angle with respect to one another. The method includes providing an external braid 24 around at least a portion of a backshell 22 integrated with the connector 14 and around a first end of the cable 12 adjacent to the connector 14.

In embodiments, the method may include feeding the wires 20 through a wall of the external braid 24 prior to termination. This may allow the external braid 24 to be installed as a flat braid on one side of the backshell 22 (e.g., the side facing the cable 12). Commonly, to achieve a full or significant effect of the strain relief capabilities, the external braid 24 generally should not stretch significantly in a direction that is not axial to the braid 24 to avoid overstretching. When stretched, the flat braid may hold more strength than a stretched braid around the circular backshell 22, thereby better ensuring that strain relief may be achieved and/or avoiding over-stretching of the braid.

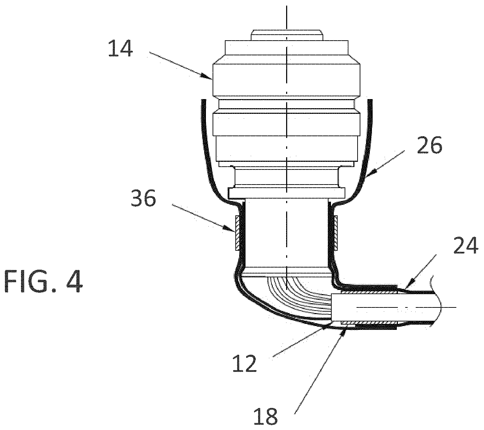

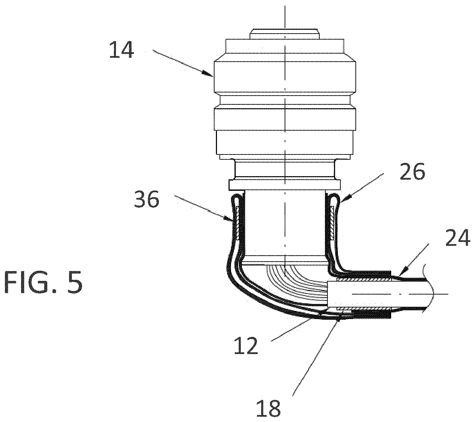

The method includes providing an overbraid 26 around at least a portion of the external braid 24, where the overbraid 26 has two layers 28 and 30. The two layers 28 and 30 are formed by providing a single material of the overbraid 26 having extra length, such as generally shown in **FIG. 4****,** and folding the single material over at least a portion of itself, such as generally shown in **FIG. 5****.**

In embodiments, the method may also include securing the single material of the overbraid 26 to the external braid 24 in a region of the connector 14, for example, via a band 36, where the single material may be folded over the band 36. The method further includes securing a free end 34 of the overbraid 26 opposite a folded end 32 to the external braid 24 in a region of the first end of the cable 12.

With embodiments, the method may further include providing a shrink tubing 40 around at least a portion of the overbraid 26 in a region of the backshell 22 and/or shrink tubing 42 around at least a portion of the overbraid 26 in a region of the first end of the cable 12 and/or around at least portion of the cable 12 and/or providing a heat shrink boot 44 from the connector 14 to the cable 12. The shrink tubing 40, 42 and/or the heat shrink boot 44 may be bonded via a compatible epoxy.

Various embodiments are described herein for various apparatuses, systems, and/or methods. Numerous specific details are set forth to provide a thorough understanding of the overall structure, function, manufacture, and use of the embodiments as described in the specification and illustrated in the accompanying drawings. It will be understood by those skilled in the art, however, that the embodiments may be practiced without such specific details. In other instances, well-known operations, components, and elements have not been described in detail so as not to obscure the embodiments described in the specification. Those of ordinary skill in the art will understand that the embodiments described and illustrated herein are non-limiting examples, and thus it can be appreciated that the specific structural and functional details disclosed herein may be representative and do not necessarily limit the scope of the embodiments.

Reference throughout the specification to "various embodiments," "with embodiments," "in embodiments," or "an embodiment," or the like, means that a particular feature, structure, or characteristic described in connection with the embodiment is included in at least one embodiment. Thus, appearances of the phrases "in various embodiments," "with embodiments," "in embodiments," or "an embodiment," or the like, in places throughout the specification are not necessarily all referring to the same embodiment. Furthermore, the particular features, structures, or characteristics may be combined in any suitable manner in one or more embodiments. Thus, the particular features, structures, or characteristics illustrated or described in connection with one embodiment/example may be combined, in whole or in part, with the features, structures, functions, and/or characteristics of one or more other embodiments/examples without limitation given that such combination is not illogical or non-functional.

It should be understood that references to a single element are not necessarily so limited and may include one or more of such element. Any directional references (e.g., plus, minus, upper, lower, upward, downward, left, right, leftward, rightward, top, bottom, above, below, vertical, horizontal, clockwise, and counterclockwise) are only used for identification purposes to aid the reader's understanding of the present disclosure, and do not create limitations, particularly as to the position, orientation, or use of embodiments.

Joinder references (e.g., attached, coupled, connected, and the like) are to be construed broadly and may include intermediate members between a connection of elements and relative movement between elements. As such, joinder references do not necessarily imply that two elements are directly connected/coupled and in fixed relation to each other. The use of "e.g." in the specification is to be construed broadly and is used to provide non-limiting examples of embodiments of the disclosure, and the disclosure is not limited to such examples. Uses of "and" and "or" are to be construed broadly (e.g., to be treated as "and/or"). For example and without limitation, uses of "and" do not necessarily require all elements or features listed, and uses of "or" are intended to be inclusive unless such a construction would be illogical.

While processes, systems, and methods may be described herein in connection with one or more steps in a particular sequence, it should be understood that such methods may be practiced with the steps in a different order, with certain steps performed simultaneously, with additional steps, and/or with certain described steps omitted.

It is intended that all matter contained in the above description or shown in the accompanying drawings shall be interpreted as illustrative only and not limiting. Changes in detail or structure may be made without departing from the present disclosure.

## Claims

1. A harness assembly (10), comprising:
a cable (12) having a cable shielding (16) around at least a portion of a plurality of wires (20);
a connector (14) with an integrated backshell (22) arranged at an angle with respect to the cable (12);
an external braid (24) disposed around at least a portion of the backshell (22) and the cable (12); and
an overbraid (26) around at least a portion of the external braid (24);
**characterized by**
the overbraid (26) having two layers (28, 30);
wherein the overbraid (26) is a single material folded over at least a portion of itself to form the two layers (28, 30); and
wherein an end of the overbraid (26) is secured to the cable (12).

2. The harness assembly (10) of claim 1, wherein the angle is approximately 90 degrees, and preferably approximately 45 degrees.

3. The harness assembly (10) of claim 1, further comprising a band (36) disposed around a first of the two layers (28, 30) of the overbraid (26), a second of the two layers (28, 30) of the overbraid (26) being disposed around the band (36).

4. The harness assembly (10) of claim 1, wherein the overbraid (26) is nickel-plated.

5. The harness assembly (10) of claim 1, further comprising shrink tubing (42) over at least a portion of the overbraid (26) in a region of the backshell (22).

6. The harness assembly (10) of claim 1, further comprising a cable tie (38) around at least a portion of the overbraid (26) in a region of an end of the cable (12).

7. The harness assembly (10) of claim 1, wherein at least a portion of the external braid (24) is configured as a flat braid.

8. The harness assembly (10) of claim 1, further comprising a polytetrafluoroethylene tubing (18) disposed at an end of the cable (12) between the cable shielding (16) and the external braid (24).

9. A method for assembling a harness assembly (10), comprising:
arranging a cable (12) and a connector (14) with an integrated backshell (22) at an angle with respect to one another, the cable (12) having a cable shielding (16) around at least a portion of a plurality of wires (20);
providing an external braid (24) around at least a portion of the backshell (22) and an end of the cable (12) adjacent to the connector (14); and
providing an overbraid (26) around at least a portion of the external braid (24);
**characterized by**
the overbraid (26) having two layers (28, 30);
wherein a single material of the overbraid (26) is folded over at least a portion of itself to form the two layers (28, 30); and
wherein an end of the overbraid (26) is secured to the cable (12).

10. The method of claim 9, further comprising feeding the cable (12) through a wall of the external braid (24) prior to termination.

11. The method of claim 9, further comprising securing the single material of the overbraid (26) to the at least a portion of the external braid (24) in a region of the connector (14) via a band (36), wherein the single material is folded over the band (36).

12. The method of claim 9, further comprising securing the end (34) of the overbraid (26) opposite a folded end (32) of the overbraid (26) to the at least a portion of the external braid (24) in a region of the end of the cable (12) adjacent to the connector (14).

13. The method of claim 9, wherein the angle is approximately 90 degrees, and preferably approximately 45 degrees.

14. The method of claim 9, wherein the angle is approximately 45 degrees.

## Patentansprüche

1. Kabelbaum-Anordnung (10), umfassend:
ein Kabel (12), das eine Kabelabschirmung (16) um mindestens einen Abschnitt einer Vielzahl von Drähten (20) herum aufweist;
einen Verbinder (14) mit einer integrierten Rückschale (22), der in einem Winkel in Bezug auf das Kabel (12) angeordnet ist;
ein äußeres Geflecht (24), das um mindestens einen Abschnitt der Rückschale (22) und des Kabels (12) angeordnet ist; und
ein Übergeflecht (26) um mindestens einen Abschnitt des äußeren Geflechts (24) herum;
**dadurch gekennzeichnet, dass**
das Übergeflecht (26) zwei Schichten (28, 30) aufweist;
wobei das Übergeflecht (26) ein einzelnes Material ist, das mindestens über einen Abschnitt von sich selbst gefaltet ist, um die beiden Schichten (28, 30) zu bilden; und
wobei ein Ende des Übergeflechts (26) an dem Kabel (12) befestigt ist.

2. Kabelbaum-Anordnung (10) nach Anspruch 1, wobei der Winkel etwa 90 Grad und vorzugsweise etwa 45 Grad beträgt.

3. Kabelbaum-Anordnung (10) nach Anspruch 1, ferner umfassend ein Band (36), das um eine erste der beiden Schichten (28, 30) des Übergeflechts (26) angeordnet ist, wobei eine zweite der beiden Schichten (28, 30) des Übergeflechts (26) um das Band (36) herum angeordnet ist.

4. Kabelbaum-Anordnung (10) nach Anspruch 1, wobei das Übergeflecht (26) vernickelt ist.

5. Kabelbaum-Anordnung (10) nach Anspruch 1, ferner umfassend einen Schrumpfschlauch (42) über mindestens einem Abschnitt des Übergeflechts (26) in einem Bereich der Rückschale (22).

6. Kabelbaum-Anordnung (10) nach Anspruch 1, ferner umfassend einen Kabelbinder (38) um mindestens einen Abschnitt des Übergeflechts (26) herum in einem Bereich eines Endes des Kabels (12).

7. Kabelbaum-Anordnung (10) nach Anspruch 1, wobei mindestens ein Abschnitt des äußeren Geflechts (24) als flaches Geflecht konfiguriert ist.

8. Kabelbaum-Anordnung (10) nach Anspruch 1, ferner umfassend einen Polytetrafluorethylenschlauch (18), der an einem Ende des Kabels (12) zwischen der Kabelabschirmung (16) und dem äußeren Geflecht (24) angeordnet ist.

9. Verfahren zum Zusammenbauen einer Kabelbaum-Anordnung (10), umfassend:
Anordnen eines Kabels (12) und eines Verbinders (14) mit einer integrierten Rückschale (22) in einem Winkel in Bezug zueinander, wobei das Kabel (12) eine Kabelabschirmung (16) um mindestens einen Abschnitt einer Vielzahl von Drähten (20) aufweist;
Bereitstellen eines äußeren Geflechts (24) um mindestens einen Abschnitt der Rückschale (22) und ein Ende des Kabels (12) neben dem Verbinder (14); und
Bereitstellen eines Übergeflechts (26) um mindestens einen Abschnitt des äußeren Geflechts (24) herum;
**dadurch gekennzeichnet, dass**
das Übergeflecht (26) zwei Schichten (28, 30) aufweist;
wobei ein einzelnes Material des Übergeflechts (26) mindestens über einen Abschnitt von sich selbst gefaltet ist, um die beiden Schichten (28, 30) zu bilden; und
wobei ein Ende des Übergeflechts (26) an dem Kabel (12) befestigt ist.

10. Verfahren nach Anspruch 9, ferner umfassend das Führen des Kabels (12) durch eine Wand des äußeren Geflechts (24) vor dem Abschluss.

11. Verfahren nach Anspruch 9, ferner umfassend das Befestigen des einzelnen Materials des Übergeflechts (26) an mindestens einem Abschnitt des äußeren Geflechts (24) in einem Bereich des Verbinders (14) über ein Band (36), wobei das einzelne Material über das Band (36) gefaltet ist.

12. Verfahren nach Anspruch 9, ferner umfassend das Befestigen des Endes (34) des Übergeflechts (26) gegenüber einem gefalteten Ende (32) des Übergeflechts (26) an mindestens einem Abschnitt des äußeren Geflechts (24) in einem Bereich des Endes des Kabels (12) neben dem Verbinder (14).

13. Verfahren nach Anspruch 9, wobei der Winkel etwa 90 Grad und vorzugsweise etwa 45 Grad beträgt.

14. Verfahren nach Anspruch 9, wobei der Winkel etwa 45 Grad beträgt.

## Revendications

1. Ensemble harnais (10), comprenant :
un câble (12) comportant un blindage (16) du câble autour d'au moins une partie d'une pluralité de fils (20) ;
un connecteur (14) comportant une coque arrière (22) intégrée disposée à un angle par rapport au câble (12) ;
une tresse (24) externe disposée autour d'au moins une partie de la coque arrière (22) et du câble (12) ; et
une tresse de recouvrement (26) autour d'au moins une partie de la tresse (24) externe ;
**caractérisé par**
la tresse de recouvrement (26) comportant deux couches (28, 30) ;
dans lequel la tresse de recouvrement (26) est une matière unique pliée sur au moins une partie d'elle-même pour former les deux couches (28, 30) ; et
dans lequel une extrémité de la tresse de recouvrement (26) est fixée au câble (12).

2. Ensemble harnais (10) selon la revendication 1, dans lequel l'angle est d'environ 90 degrés, et de préférence d'environ 45 degrés.

3. Ensemble harnais (10) selon la revendication 1, comprenant en outre une bande (36) disposée autour d'une première des deux couches (28, 30) de la tresse de recouvrement (26), une seconde des deux couches (28, 30) de la tresse de recouvrement (26) étant disposée autour de la bande (36).

4. Ensemble harnais (10) selon la revendication 1, dans lequel la tresse de recouvrement (26) est nickelée.

5. Ensemble harnais (10) selon la revendication 1, comprenant en outre un tube (42) rétractable sur au moins une partie de la tresse de recouvrement (26) dans une zone de la coque arrière (22).

6. Ensemble harnais (10) selon la revendication 1, comprenant en outre un serre-câble (38) autour d'au moins une partie de la tresse de recouvrement (26) dans une zone d'une extrémité du câble (12).

7. Ensemble harnais (10) selon la revendication 1, dans lequel au moins une partie de la tresse (24) externe est conçue sous la forme d'une tresse plate.

8. Ensemble harnais (10) selon la revendication 1, comprenant en outre un tube (18) en polytétrafluoroéthylène disposé à l'extrémité du câble (12) entre le blindage (16) du câble et la tresse (24) externe.

9. Procédé d'assemblage d'un ensemble harnais (10), comprenant :
l'agencement d'un câble (12) et d'un connecteur (14) avec une coque arrière (22) intégrée à un angle l'un par rapport à l'autre, le câble (12) comportant un blindage (16) du câble autour d'au moins une partie d'une pluralité de fils (20) ;
la fourniture d'une tresse (24) externe autour d'au moins une partie de la coque arrière (22) et d'une extrémité du câble (12) adjacente au connecteur (14) ; et
la fourniture d'une tresse de recouvrement (26) autour d'au moins une partie de la tresse (24) externe ;
**caractérisé par**
la tresse de recouvrement (26) comportant deux couches (28, 30) ;
dans lequel une seule matière de la tresse de recouvrement (26) est pliée sur au moins une partie d'elle-même pour former les deux couches (28, 30) ; et
dans lequel une extrémité de la tresse de recouvrement (26) est fixée au câble (12).

10. Procédé selon la revendication 9, comprenant en outre l'introduction du câble (12) à travers une paroi de la tresse (24) externe avant la terminaison.

11. Procédé selon la revendication 9, comprenant en outre la fixation de la seule matière de la tresse de recouvrement (26) à l'au moins une partie de la tresse (24) externe dans une zone du connecteur (14) par l'intermédiaire d'une bande (36), la seule matière étant pliée sur la bande (36).

12. Procédé selon la revendication 9, comprenant en outre la fixation de l'extrémité (34) de la tresse de recouvrement (26) en regard d'une extrémité(32) pliée de la tresse de recouvrement (26) à l'au moins une partie de la tresse (24) externe dans une zone de l'extrémité du câble (12) adjacente au connecteur (14).

13. Procédé selon la revendication 9, dans lequel l'angle est d'environ 90 degrés, et de préférence d'environ 45 degrés.

14. Procédé selon la revendication 9, dans lequel l'angle est d'environ 45 degrés.
